# EUROPEAN PATENT APPLICATION

(11) **EP 3 525 446 A1**
(43) Date of publication of application: **14.08.2019**
(21) Application number: 16919645.8
(22) Date of filing: 29.10.2016
(51) Int. Cl.: H04N 5/232, G06F 9/445

(54) **PHOTOGRAPHING METHOD AND TERMINAL**

(71) Applicant: Huawei Technologies Co., Ltd., Longgang District Shenzhen, Guangdong 518129 (CN)
(72) Inventor: CHEN, Guodong, Shenzhen Guangdong 518129 (CN); CHAI, Zhongyan, Shenzhen Guangdong 518129 (CN)
(74) Representative: Gill Jennings & Every LLP
(86) International application number: PCT/CN2016/103879
(87) International publication number: WO 2018/076309

(57) **Abstract**

Embodiments of the present invention provide a shooting method and a terminal. The method includes: receiving, by a terminal, a first indication for opening a camera application, where the camera application is associated with at least one mode plug-in and at least one function plug-in; displaying, by the terminal, at least one mode option corresponding to the at least one mode plug-in, for selection by a user; receiving, by the terminal, a second indication indicating that the user selects a first mode option; displaying, by the terminal, a function option that supports a first mode, for selection by the user; and receiving, by the terminal, a shooting instruction, and performing shooting based on the first mode and a function that is selected by the user from the displayed function option, where a first mode plug-in corresponding to the first mode and a function plug-in corresponding to the selected function are preloaded. In the embodiments of the present invention, a mode and a function in the camera application are loaded in a plug-in manner, so that the mode and the function in the camera application are easy to change, and change costs are low.

## Description

### TECHNICAL FIELD

Embodiments of the present invention relate to camera technologies, and in particular, to a shooting method and a terminal.

### BACKGROUND

Generally, an existing terminal such as a mobile phone, a computer, or a notebook is integrated with a camera lens, and a camera application may be installed on the existing terminal. The terminal can shoot a photo and a video by using the camera application and the camera lens.

A shooting process of the existing terminal is: opening the camera application, selecting a parameter or a mode, and then shooting a photo or a video. The camera application may provide a plurality of parameters and modes for selection by a user. For example, the user may choose to shoot a standard, square, or panoramic photo, a slow-motion video, or the like, and may select whether to turn on a camera flash or whether to take burst shots or the like, and may further select a tone, brightness, and the like for a to-be-taken photo. In the existing camera application, various parameters or modes are fixed. If the user wants to add or change a parameter or a mode in the camera application, software code needs to be changed, and costs are relatively high.

### SUMMARY

Embodiments of the present invention provide a shooting method and a terminal, so as to reduce costs in changing a camera application.

According to a first aspect, an embodiment of the present invention provides a shooting method, including: receiving, by a terminal, a first indication for opening a camera application, where the camera application is installed on the terminal, the camera application is associated with at least one mode plug-in and at least one function plug-in, each mode plug-in corresponds to one mode, and each function plug-in corresponds to one function; after receiving the first indication for opening the camera application, displaying, by the terminal, at least one mode option corresponding to the at least one mode plug-in, for selection by a user, so that the user can select one from the displayed mode option; receiving, by the terminal, a second indication indicating that the user selects a first mode option, where the first mode option corresponds to a first mode; then displaying, by the terminal, a function option that supports the first mode, for selection by the user, where a function that supports the first mode is included in at least one function corresponding to the at least one function plug-in, and the user can select an expected function from the displayed function option, and then can perform a shooting process; and receiving, by the terminal, a shooting instruction, and then performing shooting based on the first mode and a function that is selected by the user from the displayed function option, where a first mode plug-in corresponding to the first mode and a function plug-in corresponding to the selected function are preloaded. A mode and a function in the camera application are loaded in a plug-in manner, so that the mode and the function in the camera application are easy to change, and change costs are low.

Optionally, the method further includes the following: a display interface that displays the at least one mode option or a display interface that displays the function option includes a download option, and the user can tap the download option to download a new function plug-in or mode plug-in; the terminal downloads the new function plug-in or mode plug-in after receiving the third indication indicating that the download option is selected, where a function option or mode option corresponding to the downloaded new function plug-in or mode plug-in may be displayed by the terminal for selection by the user. The mode or function can be freely added to the camera application, thereby increasing flexibility of the camera application.

Optionally, the method further includes the following: one or more of the at least one mode plug-in and the at least one function plug-in in the terminal can be deleted, or a plurality of mode options or a plurality of function options that are displayed in the terminal can be moved. The mode or function in the camera application can be freely deleted, thereby increasing flexibility of the camera application.

Optionally, the displaying, by the terminal, a function option that supports the first mode, for selection by the user specifically includes: obtaining, by the terminal from a dynamically updated set that includes function options corresponding to all function plug-ins, a function option that matches the first mode; and then displaying, by the terminal, the function option that matches the first mode, for selection by the user. Alternatively, the terminal may further obtain all function options that support the first mode from a dynamically updated mapping table, and then display these function options, where the mapping table includes a correspondence between a mode and a function. After the user selects a mode, the terminal may obtain, from a dynamically updated function library, a function that matches the mode, and display the function for selection by the user, so that the camera application is changed more flexibly.

Optionally, after downloading the new function plug-in, the terminal may load the new function plug-in; after the user selects the function option corresponding to the new function plug-in, the terminal runs the new function plug-in; and when running the new function plug-in, the terminal may invoke a first module corresponding to the new function plug-in, to perform a function corresponding to the new function plug-in. Specifically, the first module may include a capture flow parameter setting module, a capture flow pre-processing module, a capturing module, a capture flow post-processing module, a preview flow parameter setting module, a preview flow pre-processing module, or a preview flow post-processing module. One or more modules in a capture flow and a preview flow can be changed and enhanced by using the newly added function plug-in.

Optionally, when the terminal displays a plurality of mode options, the plurality of mode options are displayed in a first user interface; when the terminal displays a plurality of function options, the plurality of function options are displayed in a second user interface; and the first user interface is different from the second user interface. The second user interface may include a function display interface, or include a preview interface and a function display interface. The mode or function options may be displayed together, to facilitate centralized operation of the user.

Optionally, the method further includes: displaying, by the terminal based on a received fourth indication for displaying a mode option, the at least one mode option for selection by the user; or displaying, by the terminal based on a received fifth indication for displaying a function option, the function option for selection by the user. The terminal may automatically display a mode option or a function option for selection by the user, or may display a mode option or a function option based on an indication of the user.

Optionally, the mode plug-in is used to control a shooting procedure. The mode corresponding to the mode plug-in includes any one or more of the following: photo, monochrome, beauty, video, high dynamic range imaging, beauty video, super night shot, light painting, time-lapse, slow-motion, watermark, audio note, document correction, and good food mode.

Optionally, the function plug-in is used to control a shooting function. A function corresponding to the function plug-in includes any one or more of the following: resolution, geographical tag, automatically add watermarks, assistive grid, mute, self-timer, audio control, touch to capture, capture smiles, object tracking, touch and hold shutter button function, volume button function, ultra snapshot, image adjustment, and video stabilization.

Optionally, the function option that supports the first mode is a function that is compatible with the first mode.

According to a second aspect, an embodiment of the present invention provides a shooting apparatus, included in a terminal. The shooting apparatus has a function of implementing behavior of the terminal in the methods in the first aspect. The function may be implemented by hardware, or implemented by executing corresponding software by hardware. The hardware or software includes one or more modules that correspond to the foregoing function.

According to a third aspect, an embodiment of the present invention provides a terminal, including: a processor, a memory, a camera lens, a display, and the like, where the memory is configured to store data; the camera lens is configured to capture an image; the display is configured to display various information or data for viewing by a user; and the processor is configured to perform the method in the first aspect.

An embodiment of the present invention further provides a computer storage medium, configured to store a computer software instruction used by the terminal in any one of the foregoing aspects. The computer software instruction is used to execute the method or program designed in the foregoing aspects.

An embodiment of the present invention further provides a data processing system, including modules configured to perform the methods provided in the first aspect.

An embodiment of the present invention further provides a computer program, configured to perform the methods provided in the first aspect.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a terminal having a shooting function according to an embodiment of the present invention;
FIG. 2 is a schematic diagram of a running procedure of a camera application according to an embodiment of the present invention;
FIG. 3a and FIG. 3b are schematic diagrams of two assembling manners according to an embodiment of the present invention;
FIG. 4 is a schematic diagram of a capture flow model and a preview flow model according to an embodiment of the present invention;
FIG. 5 is a flowchart of a shooting method according to an embodiment of the present invention;
FIG. 6a to FIG. 6h are schematic diagrams of a user interface in a shooting method according to an embodiment of the present invention;
FIG. 7a to FIG. 7c are schematic diagrams of a user interface according to an embodiment of the present invention;
FIG. 8a to FIG. 8c are schematic diagrams of another user interface according to an embodiment of the present invention;
FIG. 9 is a flowchart of an implementation of starting a camera application according to an embodiment of the present invention;
FIG. 10a to FIG. 10c are schematic diagrams of still another user interface according to an embodiment of the present invention;
FIG. 11a and FIG. 11b are schematic diagrams of yet another user interface according to an embodiment of the present invention;
FIG. 12 is a schematic diagram of countdown photographing according to an embodiment of the present invention;
FIG. 13 is a schematic diagram of filter photographing according to an embodiment of the present invention;
FIG. 14 is a schematic diagram of image adjustment according to an embodiment of the present invention; and
FIG. 15 is a schematic structural diagram of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A shooting method provided in the embodiments of the present invention is applied to a terminal having a shooting function. For example, the terminal may be a mobile telephone, a tablet computer (Tablet Personal Computer), a laptop computer (Laptop Computer), a digital camera, a personal digital assistant (personal digital assistant, PDA for short), a navigation apparatus, a mobile Internet device (Mobile Internet Device, MID), or a wearable device (Wearable Device).

"Shooting" in the embodiments of the present invention may include taking photos (take photos) and recording videos (record videos or capture videos).

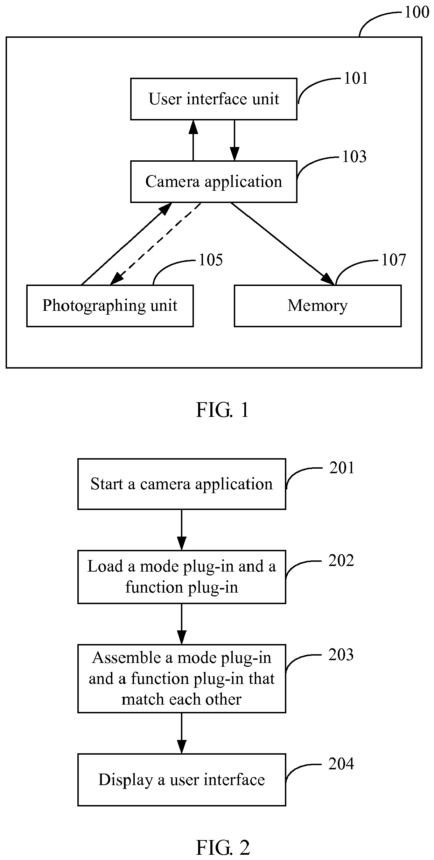

FIG. 1 is a schematic diagram of a terminal having a shooting function according to an embodiment of the present invention. As shown in FIG. 1, the terminal 100 includes a user interface unit 101, a camera application 103, a photographing unit 105, a memory 107, and the like. A person skilled in the art may understand that a structure of the terminal shown in the figure does not constitute a limitation to the present invention, connection manners in the figure may have different forms, and the terminal may include more components than those shown in the figure.

The user interface unit 101 is responsible for displaying a user interface. The user interface unit 101 may provide an interface for a user to operate, and may display different feedbacks based on different user operations. For example, the user interface unit 101 may display a user interface by using a touchscreen of the terminal, where the displayed user interface includes an interface for a user to operate; and after receiving an operation of the user on the touchscreen, the user interface unit 101 may display corresponding content based on a specific user operation.

The photographing unit 105 is responsible for capturing shooting data, and then sending the shooting data to the camera application. The camera application may control the photographing unit by setting a parameter, to obtain image data of different effects. For example, the photographing unit 105 may be a camera lens and a camera lens driver.

The memory 107 is configured to store data. In a shooting process, the memory 107 may store the shooting data.

The camera application 103 is an application installed on the terminal. The camera application 103 may process a user request, control a shooting procedure, set a parameter for the photographing unit, control the photographing unit by using the specified parameter, and obtain image data from the photographing unit; may post-process the obtained image data; and may further store the obtained image data or the post-processed image data into the memory.

The camera application provided in the embodiments of the present invention may be associated with a plurality of mode plug-ins and a plurality of function plug-ins. For example, the camera application may include a plurality of mode plug-ins and function plug-ins; or the camera application and a plurality of mode plug-ins and function plug-ins are all included in the terminal, and the camera application is associated with the mode plug-ins and function plug-ins, so that the mode plug-ins and function plug-ins can be loaded after the camera application is started. The plug-in (plug-in) is a program of an application programming interface in compliance with a specification.

FIG. 2 is a schematic diagram of a running procedure of a camera application according to an embodiment of the present invention. As shown in FIG. 2, in step 201, the camera application is started; in step 202, the camera application loads a plurality of mode plug-ins and a plurality of function plug-ins; in step 203, an assembler assembles a mode plug-in and a function plug-in that match each other, to obtain configuration information corresponding to each mode; and in step 204, the camera application renders the configuration information, so that mode information and function information corresponding to the mode information are displayed in a UI interface. The assembler may include hardware or software, or may be a logical concept. The assembler determines, based on a matching rule of a mode plug-in and a function plug-in, which functions are effective in a specific mode, to be specific, which functions support the mode; and then assembles the mode and one or more functions that support the mode. A function option that supports a mode may be a function that is compatible with the mode. It should be noted that, step 202 is not necessarily performed before step 203. In other words, the terminal does not necessarily first load the plurality of mode plug-ins and function plug-ins. Step 201, step 203, and step 204 may be first performed; and after a mode is selected by a user, the terminal loads a mode plug-in corresponding to the mode, or after a function is selected by a user, the terminal loads a function plug-in corresponding to the function.

The mode plug-in is used to control a shooting procedure. Each mode plug-in corresponds to one mode, and different modes correspond to different shooting procedures. The shooting procedure may include a shooting manner, shooting colors, how to start shooting, when to start shooting a next photo, and the like. For example, a specific mode may be: photo, monochrome, beauty, video, high dynamic range imaging (HDR, high dynamic range imaging), beauty video, super night shot, light painting, time-lapse, slow-motion, watermark, audio note, document correction, or good food mode. In photo mode, the camera automatically adjusts exposure and hues to take a photo. In monochrome mode, an image is directly formed by using a monochrome camera, to restore a real monochrome photo. In beauty mode, a facial imaging effect is optimized, to make skin look fairer and clearer. In video mode, the camera automatically adjusts exposure and hues to record a video. In HDR mode, in a scene with a strong contrast, the camera takes a plurality of photos by using different exposure parameters, and merges the plurality of photos into one photo in which both highlight and shadow details can be reserved. In beauty video mode, a face is beautified in real time in a video recording process, to make skin look fairer and clearer. In panorama mode, the user moves the camera slowly in a horizontal or vertical direction, to take a wide-angle panoramic photo. In super night shot mode, a night image may be made clearer and brighter through noise reduction algorithm processing, and light sensitivity and an exposure time may also be manually adjusted by the user. Light painting mode supports a plurality of shooting scenarios, and a special lighting effect is achieved through long-time exposure. In time-lapse mode, a recording frame rate is automatically adjusted based on a shooting time, to merge, into a short video, images that are recorded in a long time. In slow-motion mode, motion images are recorded at a high frame rate, and a specific part of a video can be played in slow motion. In watermark mode, a text and a picture watermark may be added to a photo, the watermark may be dragged, and text information in a part of the watermark may be edited. In audio note mode, after a photo is taken, an audio clip may be recorded as a note. In document correction mode, a document is captured by using the camera and is adjusted into a rectangle.

The function plug-in is used to implement a specific function. The function may include setting a shooting parameter, adding before-photographing processing, adding after-shooting processing, or the like. Specifically, for example, the function may be: resolution, in which a user can select to-be-used resolution; geographical tag, in which the user can select whether to display a current geographical location in a photo; automatically add watermarks, in which the user can select whether to automatically add a watermark to a photo; assistive grid, in which the user can select whether to use a reference line or determine to use which type of reference line when previewing; mute, in which the user can select whether to mute camera sound when taking a photo; self-timer, in which the user can set a time segment from pressing a shutter to initiating photographing; audio control, in which the user can select whether to control photographing by using a sound; touch to capture, in which the user can select whether to take a photo by touching any position on a screen; capture smiles, in which the user can select whether to automatically take a photo when the camera detects a smile; object tracking, in which the user can select whether to automatically track and focus on a tapped object; touch and hold shutter button function, in which the user can select a function corresponding to touching and holding a shutter button, for example, the user may select burst shooting corresponding to touching and holding the shutter button, or may select focusing corresponding to touching and holding the shutter button; volume button function, in which the user can select a function of a volume button during photographing, for example, the user may select a shutter function, a zoom function, or a focus function of the volume button; ultra snapshot, in which the user can select whether to allow the terminal to directly take a photo in a screen locked state, for example, the user can choose to take a photo by pressing the volume button twice in the screen locked state; image adjustment, in which the user can adjust parameters such as saturation, contrast, and brightness of an image; and video stabilization, in which the user can select whether to enable a video stabilization function.

The camera application may have a plurality of functions in each mode, that is, each mode may correspond to a plurality of functions. Functions corresponding to any two modes may be the same or different, or partly the same. Specifically, functions corresponding to each mode may depend on a shooting procedure corresponding to the mode. A function plug-in may be assembled with a corresponding mode plug-in, that is, a function plug-in and a mode plug-in that match each other are assembled. The assembly may have a plurality of implementations. For example, a function plug-in and a mode plug-in that match each other may be placed in same storage space, or a function plug-in and a mode plug-in that match each other may be identified, or a correspondence between a mode and a function may be maintained by using a matching table. An assembling manner is not limited in this embodiment of the present invention.

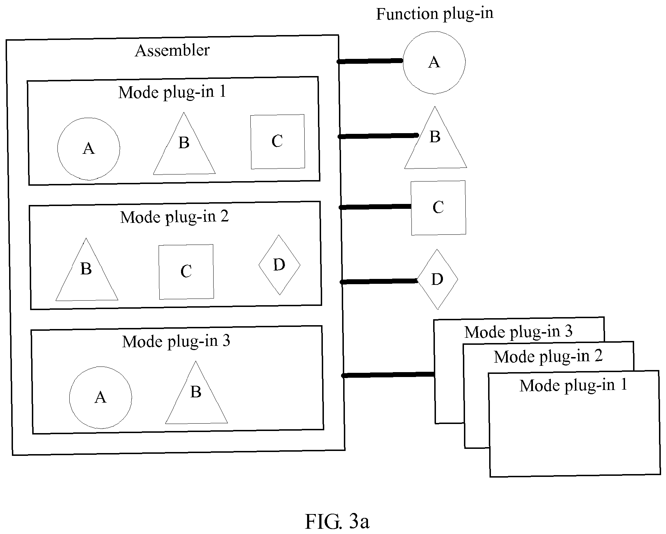

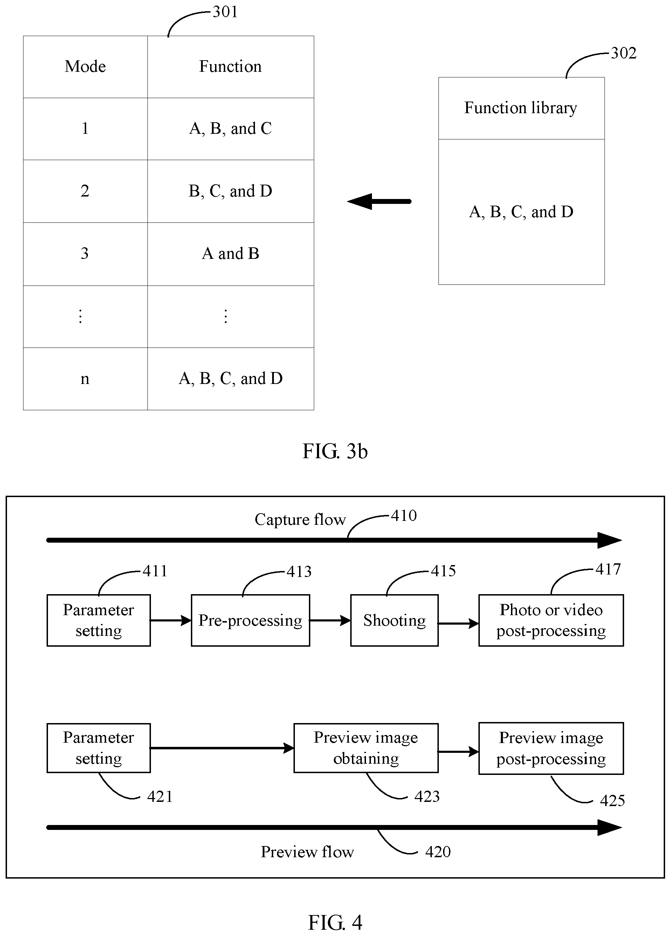

After assembly, if a mode is selected by the user, the camera application may display, in the user interface, a plurality of functions corresponding to the mode, to be specific, display a function option icon in the UI interface, and display a button or a menu that can be used for interaction with the user, so that the user can choose to enable or disable the functions. FIG. 3a is a schematic diagram of an assembling manner according to an embodiment of the present invention. As shown in FIG. 3a, the camera application includes three mode plug-ins and four function plug-ins, which are specifically: a mode plug-in 1, a mode plug-in 2, and a mode plug-in 3, and function plug-ins A, B, C, and D. In an example shown in FIG. 3a, based on pre-matching settings, in a mode 1 corresponding to the mode plug-in 1, functions corresponding to the function plug-ins A, B, and C may be selected by the user for use. To be specific, the function plug-ins A, B, and C match the mode plug-in 1; the function plug-ins B, C, and D match the mode plug-in 2; and the function plug-ins A and B match the mode plug-in 3. Therefore, an assembler can assemble a mode plug-in and a function plug-in that match each other. More specifically, for example, the mode plug-in 1, the mode plug-in 2, and the mode plug-in correspond to photo mode (mode 1), video mode (mode 2), and HDR mode (mode 3), respectively; and the function plug-ins A, B, C, and D correspond to four functions such as image adjustment (function A), mute (function B), object tracking (function C), and video stabilization (function D), respectively. According to a specific shooting procedure, for example, there may be the following matching rules: Functions such as image adjustment (function A), mute (function B), and object tracking (function C) match photo mode (mode 1); and video stabilization (function D) does not match photo mode (mode 1). In other words, in photo mode, a user can select the functions such as image adjustment, mute, and object tracking, but cannot select the video stabilization function. Functions such as mute (function B), object tracking (function C), and video stabilization (function D) match video mode (mode 2), and image adjustment (function A) does not match video mode (mode 2). Functions such as mute (function B) and object tracking (function C) match HDR mode (mode 3), and functions such as image adjustment (function A) and video stabilization (function D) do not match HDR mode (mode 3). Then, the mode plug-ins 1, 2, and 3 and the function plug-ins A, B, C, and D may be assembled based on the schematic diagram shown in FIG. 3a. FIG. 3b is a schematic diagram of another assembling manner according to an embodiment of the present invention. As shown in FIG. 3b, a terminal includes a table 301 and a function library 302. The table 301 includes a correspondence between a mode and a function. The function library 302 includes all function plug-ins, of which some function plug-ins are already included in the function library 302 at delivery of the terminal and the others are subsequently added. The subsequently added function plug-in may be actively downloaded by a user, or may be pushed by a network side. Alternatively, the function library 302 includes function options corresponding to all function plug-ins or other identifiers used to identify the function plug-ins. In other words, the function library 302 may be a set of all the function options. The function plug-in can be added or deleted, and therefore the function library 302 is dynamically updated. The terminal may select, from the function library 302, a function corresponding to each mode, and then create the table 301. In other words, after a mode is selected, the terminal may obtain, from the table 301, all functions corresponding to the mode; or after a mode is selected, the terminal may obtain, from the dynamically updated funsction library 302, a function option that matches the mode, and then display the obtained function option for selection by the user. When the function library 302 is updated, that is, when a function plug-in is added or deleted, the table 301 may also be updated.

FIG. 4 is a schematic diagram of a capture flow model and a preview flow model according to an embodiment of the present invention. To further describe a relationship between a mode plug-in, a function plug-in, and a shooting procedure, the capture flow model and the preview flow model are introduced. A terminal has a software or hardware module that can execute a capture flow and a preview flow. The capture flow 410 is used to control a shooting procedure, to be specific, control a procedure of an actual shooting action. The capture flow 410 may include the following modules: a capture flow parameter setting module 411, a pre-processing module 413, a capturing module 415, and a module 417 for post-processing a photo or video that is shot. The preview flow 420 is used to control a preview procedure, to be specific, control a procedure of a preview interface after the camera application is opened and before a photo is taken. The preview flow 420 may include the following modules: a preview flow parameter setting module 421, a preview image obtaining module 423, and a module 425 for post-processing an obtained preview image. Specifically, both the parameter setting module 411 in the capture flow 410 and the parameter setting module 421 in the preview flow 420 set a shooting parameter, and the shooting parameter may affect preview or capture effects. For example, a resolution parameter, a reference line, or the like is set. The pre-processing (preprocess) module 413 performs an action after a user presses a shutter button and before a shooting action is actually performed, for example, counting down and focusing before shooting. The capturing (capture) module 415 executes a shooting command to obtain a frame of image from an underlying layer, that is, shoots a photo or video. The preview image obtaining module 423 obtains each frame of preview image. The post-processing module 417 in the capture flow 410 further processes the photo or video that is shot, for example, adds a filter to an image. The post-processing module 425 in the preview flow 420 further processes the preview image, for example, adds a filter to the image.

Each mode plug-in may correspond to a capture flow and a preview flow. Each mode plug-in may carry some default function settings. A function plug-in may change, add, or replace one or more parts in a capture flow and a preview flow. Specifically, the function plug-in may change parameter setting, pre-processing, and post-processing in the capture flow, and may change parameter setting and post-processing in the preview flow. The terminal may load a function plug-in (including an existing function plug-in or a newly downloaded function plug-in). In an example of loading a new function plug-in, after a new function plug-in is loaded to the terminal, and the user selects a function option corresponding to the new function plug-in, the terminal runs the new function plug-in. When running the function plug-in, the terminal invokes a first module corresponding to the new function plug-in to perform a function corresponding to the new function plug-in. The first module is the module in the foregoing capture flow or preview flow, that is, the capture flow parameter setting module, the capture flow pre-processing module, the capturing module, the capture flow post-processing module, the preview flow parameter setting module, the preview flow pre-processing module, or the preview flow post-processing module. In other words, each function plug-in may correspond to one or more modules in the capture flow and the preview flow. When a function plug-in is loaded, a corresponding module is invoked to perform a function of the function plug-in.

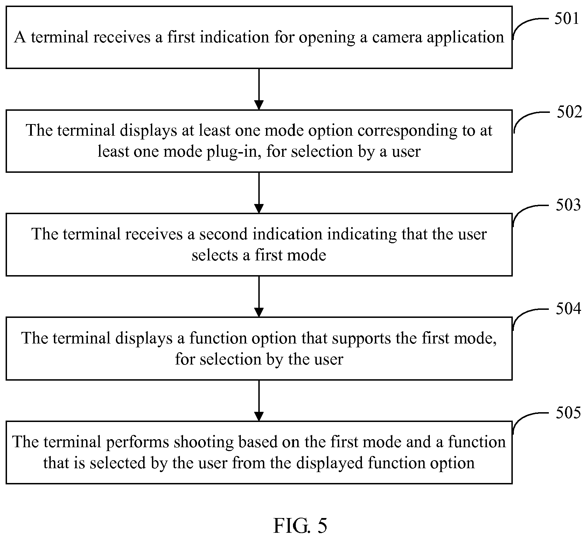

FIG. 5 is a flowchart of a shooting method according to an embodiment of the present invention. As shown in FIG. 5, the method may include the following steps.

Step 501: A terminal receives a first indication for opening a camera application, where a plurality of application programs, including the camera application, may be installed on the terminal, and the camera application is associated with one or more mode plug-ins and one or more function plug-ins.

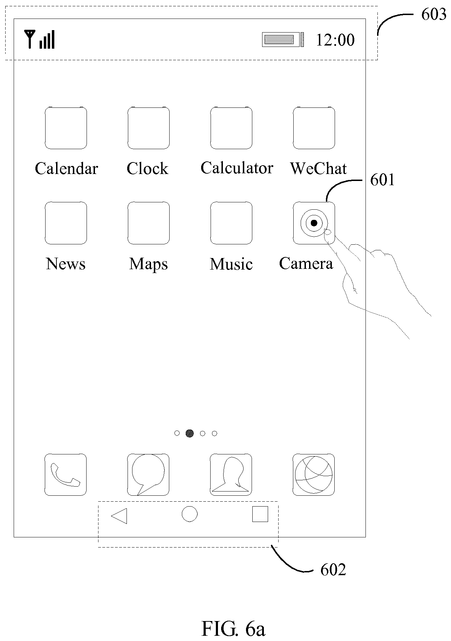

Each mode plug-in corresponds to one mode, and each function plug-in corresponds to one function. When a user wants to use the camera application, the user may open the camera application by tapping or touching a camera application icon on the terminal, or by manipulating a physical key on the terminal or manipulating an external device of the terminal, or through audio control. When the user performs the foregoing camera application opening operation, the terminal receives the first indication for opening the camera application. For example, the first indication is a touchscreen event, a physical key signal, or a sound signal, or is an instruction corresponding to the event or signal. Using FIG. 6a as an example, in a display interface of the terminal, when the user taps the camera application icon 601, the terminal receives the first indication. As shown in FIG. 6a, the display interface of the terminal may display a plurality of icons, and may further display function keys 602; in addition, a status bar 603 may be displayed at the top of the display interface.

Step 502: The terminal displays at least one mode option corresponding to the at least one mode plug-in, for selection by a user.

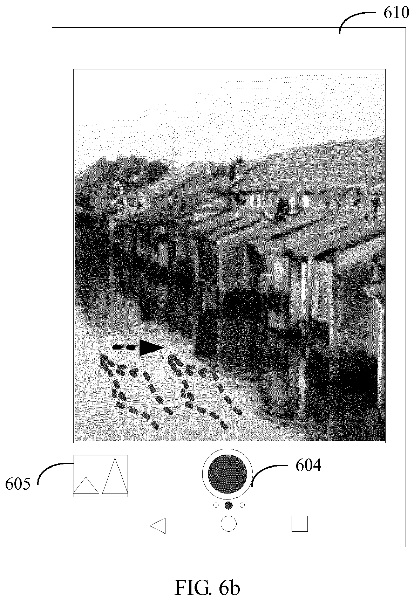

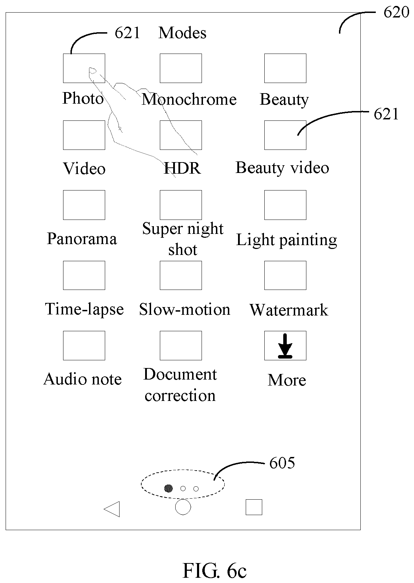

Each mode corresponds to one mode option, that is, each mode plug-in corresponds to one mode option. It should be noted that, the terminal may display all mode options. Alternatively, before displaying a mode option, the terminal may first select a currently effective mode from all modes, and then display only a mode option corresponding to the currently effective mode. The currently effective mode is a mode that is available in the current terminal, or a mode that supports the current terminal. The mode option displayed by the terminal may be selected by the user. Using FIG. 6c as an example, after the camera application is opened, the terminal may display a plurality of mode options 621 for selection by the user. The mode option may be a displayed icon. A sign 605 may be further displayed in a user interface in FIG. 6c. The sign 605 indicates a quantity of user interfaces of the camera application, and indicates that a current user interface can be moved left or right. As shown in FIG. 6c, the camera application includes three user interfaces, the current user interface is a leftmost user interface, and the user can swipe right to display the two right user interfaces. After the camera application is opened, the user may directly enter a mode option display interface 620. Alternatively, after the camera application is opened, the user may first enter a preview interface 610 shown in FIG. 6b; and then based on a specific user interface design, the user may enter, through an operation, the mode option display interface, that is, the user interface 620 shown in FIG. 6c. In other words, before step 502, the method in this embodiment may further include: receiving, by the terminal, a fourth indication for displaying a mode option. Specifically, after entering the preview interface 610 shown in FIG. 6b, the user may swipe right (or left) on a screen, to enter the user interface 620 shown in FIG. 6c. Alternatively, after entering the user interface 610 shown in FIG. 6b, the user may enter the user interface 620 shown in FIG. 6c by tapping an option on the screen. A specific action of entering the user interface shown in FIG. 6c from that shown in FIG. 6b is not limited in this embodiment of the present invention. After the operation of the user, the terminal receives the fourth indication, and then displays the mode option interface for selection by the user. As shown in FIG. 6b, after the camera application is opened, an image captured by a camera lens may be displayed in the preview interface 610. The preview interface 610 may further include another icon or key, for example, a camera shutter 604 and a gallery switch key 605. The user may shoot a photo or a video by tapping the shutter 604, and may switch to a gallery by tapping the gallery switch key 605, to view the photo or the video.

Step 503: The terminal receives a second indication indicating that the user selects a first mode option, where the first mode option corresponds to a first mode.

The user may select one from the plurality of mode options 621 displayed by the terminal. For example, if the user selects the first mode option (a photo icon), it indicates that the user selects the first mode to perform shooting. As shown in FIG. 6c, the user may select any one from the plurality of displayed mode options 621.

Step 504: The terminal displays a function option that supports the first mode, for selection by the user, where a function that supports the first mode is included in at least one function corresponding to the at least one function plug-in.

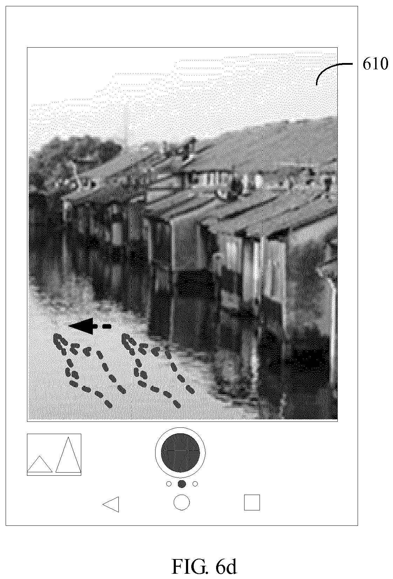

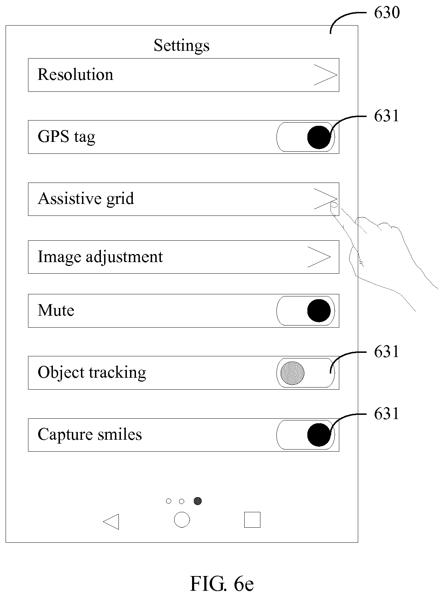

After receiving the second indication indicating that the user selects the first mode, the terminal may select, from all function plug-ins, a function plug-in that supports the first mode, and then assemble the first mode and all function plug-ins that support the first mode. After assembly, the terminal may display all function options that support the first mode, for selection by the user. As shown in FIG. 6e, the terminal may display a plurality of function options 631 for selection by the user. After the user selects the first mode, the camera application may directly display the function option that supports the first mode. Alternatively, after the user selects the first mode, the camera application may first display a preview interface, and then based on an operation of the user, enter a function option display interface, that is, a user interface 630 shown in FIG. 6e. In other words, before step 505, the method in this embodiment may further include: receiving, by the terminal, a fifth indication for displaying a function option. Specifically, after entering the preview interface 610 shown in FIG. 6d, the user may swipe left (or right) on the screen, to enter the user interface 630 shown in FIG. 6e. Alternatively, after entering the user interface 610 shown in FIG. 6d, the user may enter the user interface 630 shown in FIG. 6e by tapping an option on the screen. A specific action of entering the user interface shown in FIG. 6e from that shown in FIG. 6d is not limited in this embodiment of the present invention. After the operation of the user, the terminal receives the fifth indication, and then displays the function option interface for selection by the user.

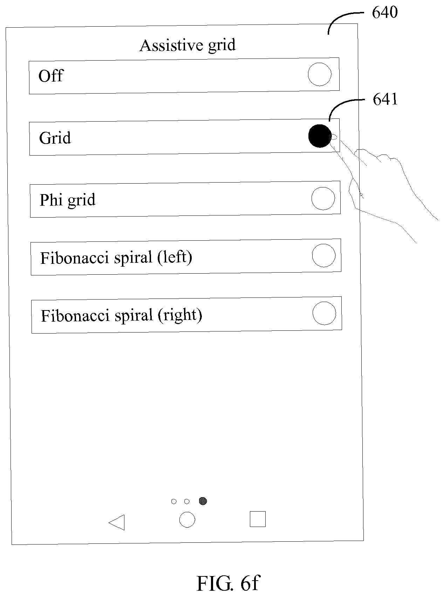

In the user interface 630 shown in FIG. 6e, the user may select a to-be-used function, or select a specific parameter for a function. For example, the user may select whether to mute camera sound or whether to capture a smile, or the like; and the user may further select one from a plurality of resolution parameters, and select one from a plurality of types of reference lines. As shown in FIG. 6f, after the user selects "assistive grid" in the user interface 630, the terminal displays a user interface 640. In the user interface 640, the user may select one from the plurality of types of reference lines, for example, select "grid".

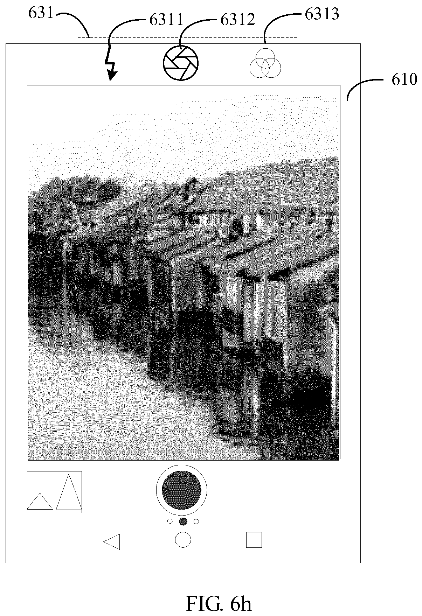

It should be noted that, when displaying a mode option, the terminal may display all mode options in one user interface (for example, a first user interface), for example, the user interface 620 shown in FIG. 6c. When displaying a function option, the terminal may display all function options in a second user interface. The second user interface is different from the first user interface. The second user interface may be one user interface, for example, the function display interface 630 shown in FIG. 6e. Alternatively, the second user interface may be two user interfaces. To be specific, some function options are displayed in one user interface, and some function options are displayed in the other user interface. For example, the function options are displayed in the function display interface 630 shown in FIG. 6e and a preview interface 610 shown in FIG. 6h. The user interface 610 shown in FIG. 6h may include some function options 631, for example, function options such as camera flash 6311, wide aperture 6312, and tone 6313 that are shown in the figure.

Step 505: The terminal receives a shooting instruction, and performs shooting based on the first mode and a function that is selected by the user from the displayed function option, where a first mode plug-in corresponding to the first mode and a function plug-in corresponding to the selected function are preloaded.

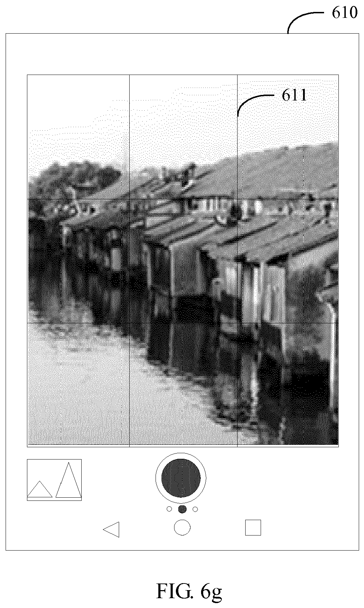

After the user selects a mode and a function, the terminal may perform shooting based on the selected mode and function, to be specific, control a preview flow and a capture flow based on the selected mode and function. In other words, after the mode or function is selected, when returning to a preview interface, the terminal has displayed the preview interface based on the selected mode and/or function. When receiving the shooting instruction, the terminal performs shooting based on the selected mode and function. The shooting instruction may be an instruction sent when the user triggers the shutter, or may be another instruction that triggers shooting. For example, when the capture smiles function is selected, once the camera lens captures a smile, the terminal receives a shooting instruction and then performs shooting. During shooting, a shooting manner, a shooting parameter, a shooting post-processing manner, and the like of the terminal all depend on the mode and the function that are selected by the user. For example, as shown in FIG. 6c, if the user selects "photo" mode, the terminal controls the camera lens to shoot a photo instead of a video. As shown in FIG. 6e to 6f, the user selects 3x3 grid reference lines, and as shown in FIG. 6g, after the user returns to the preview interface, the 3x3 grid reference lines 611 are displayed in the preview interface 610. As shown in FIG. 6e, if the user selects the capture smiles function and the mute function, a photo is taken in silence when the camera lens captures a smile.

Before shooting, the selected first mode plug-in and the selected function plug-in are both preloaded to the terminal. In this embodiment of the present invention, the terminal may load a mode plug-in and a function plug-in on different occasions. For example, after step 501 and before step 502, the terminal may load all mode plug-ins and function plug-ins. Alternatively, the terminal may not load a plug-in at first, but may load, after step 503, that is, after the user selects the first mode, a mode plug-in corresponding to the selected first mode and all function plug-ins that support the first mode. Alternatively, the terminal may first load a mode plug-in before step 502 or after step 503, and load, after step 504 and the terminal selects the function option, a function plug-in corresponding to a function selected by the terminal.

After shooting, the user may exit the camera application. When the camera application is reopened, the terminal may perform the foregoing step 501 to step 505 again. When the user does not exit the camera application, but chooses to switch to another mode, for example, switch to a second mode, step 503 to step 505 are performed again with reference to the foregoing procedure.

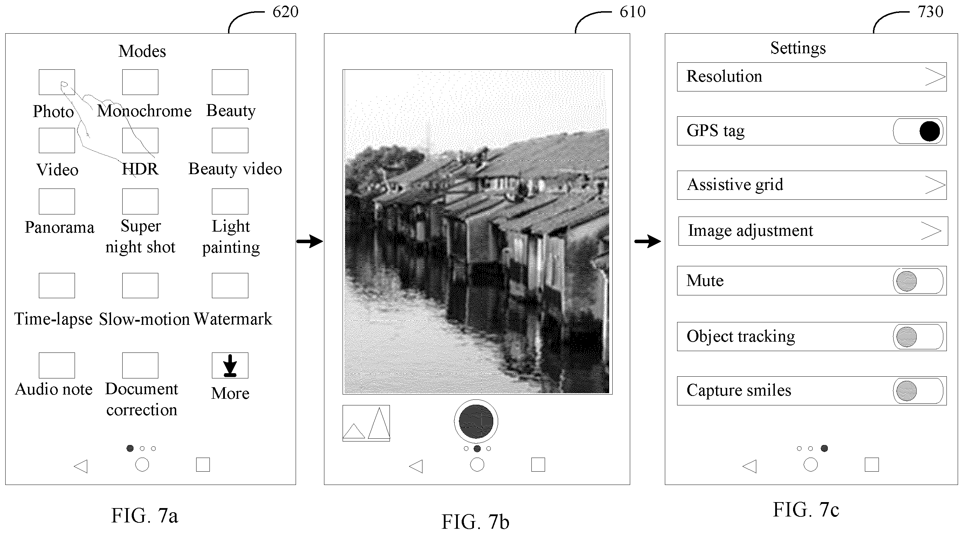

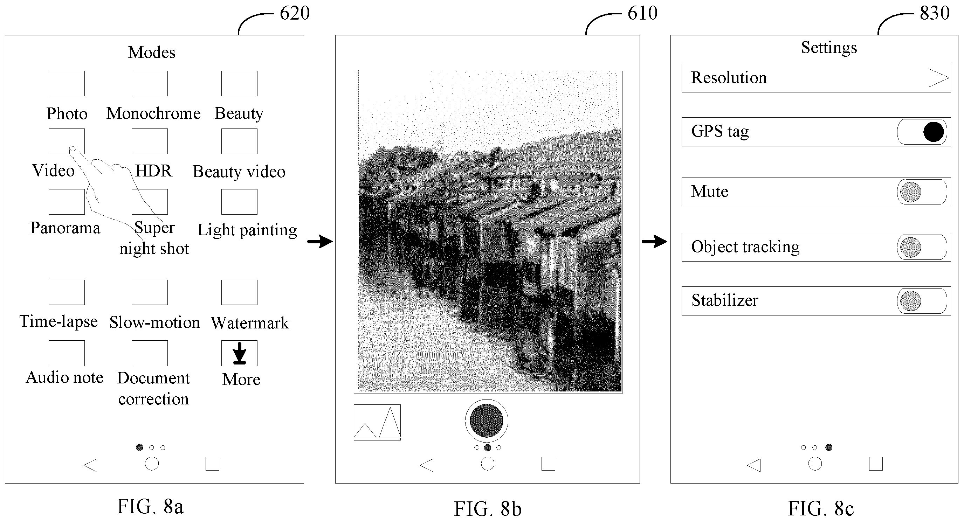

It should be noted that, in step 504, the user displays a function option based on a mode selected by the user. Different modes may correspond to different function options. As shown in FIG. 7a to FIG. 7c, in FIG. 7a, the user selects photo mode, and then automatically or manually switches to a preview interface 610 shown in FIG. 7b. In the preview interface 610, the user may swipe left on the screen, and then obtain a function option display interface 730 shown in FIG. 7c. Functions such as resolution, geographical tag, assistive grid, image adjustment, mute, object tracking, and capture smiles that support photo mode are displayed in the display interface 630 in FIG. 7c. As shown in FIG. 8a to FIG. 8c, in FIG. 8a, the user selects video mode, and then switches a preview interface 610 shown in FIG. 8b to a function option display interface 630 shown in FIG. 8c. Functions such as resolution, geographical tag, mute, object tracking, and video stabilization that support video mode are displayed in the display interface 830 in FIG. 8c, and may be different from content displayed in the display interface 730 in FIG. 7c.

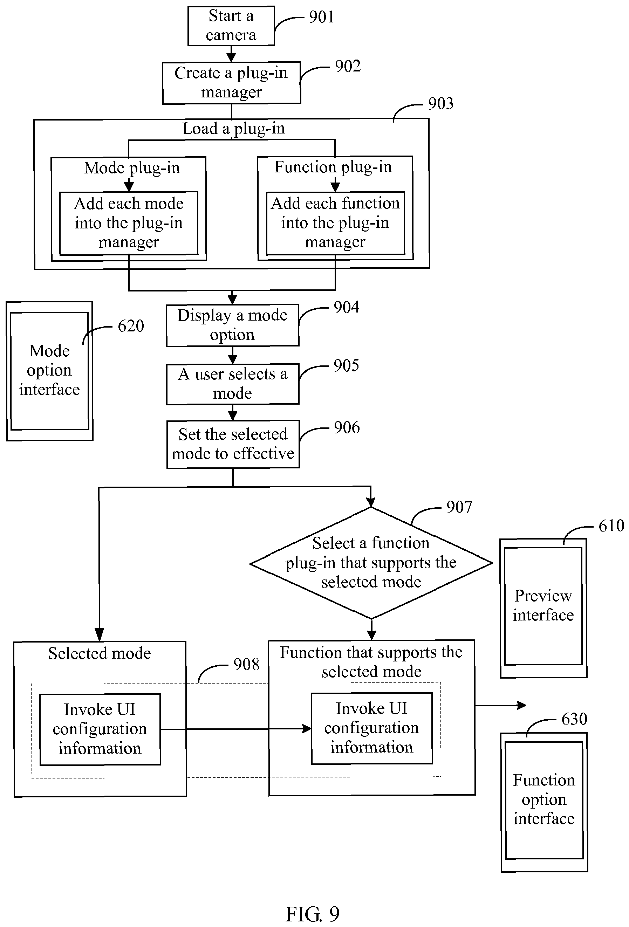

The method shown in FIG. 5 may have a plurality of specific implementations. FIG. 9 is a flowchart of an implementation of starting a camera application according to an embodiment of the present invention. As shown in FIG. 9, in step 901, after a user chooses to open a camera application, a terminal starts the camera; in step 902, the terminal creates a plug-in manager (PluginManager); in step 903, the terminal loads all mode plug-ins and function plug-ins, to be specific, the terminal adds modes corresponding to all the mode plug-ins to the plug-in manager, and adds functions corresponding to all the function plug-ins to the plug-in manager, where in this embodiment, that all plug-ins are loaded first is used as an example; in step 904, after all the plug-ins are loaded, the terminal may display all mode options in a mode option interface 620; in step 905, in the mode option interface 620, the user may select one mode; in step 906, the terminal receives an indication indicating that the user selects a mode, and then sets the selected mode to effective; in step 907, the terminal selects, from a plurality of function plug-ins, a function plug-in that supports the selected mode; and in step 908, the terminal invokes UI configuration information of the selected mode and UI configuration information of a function that supports the selected mode, and then may display, in a user interface, a function option that supports the selected mode. For example, the terminal may display the function option in a function option display interface 630 and a preview interface 610.

After shooting, when the user exits the camera or switches to another mode, the terminal may invoke a detachment (detach) method of each function plug-in that supports the selected mode, to make a current function no longer effective; and then invoke a deactivation (deactivate) method of the selected mode, to make a selected mode plug-in stop working. If the user exits the camera and then reopens the camera, step 501 to step 505 are performed again with reference to the foregoing procedure. If the user switches from the currently selected mode to another mode, for example, from a first mode to a second mode, step 503 to step 505 are performed again with reference to the foregoing procedure.

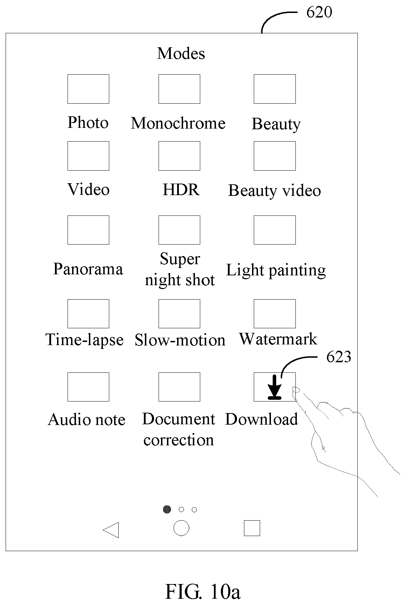

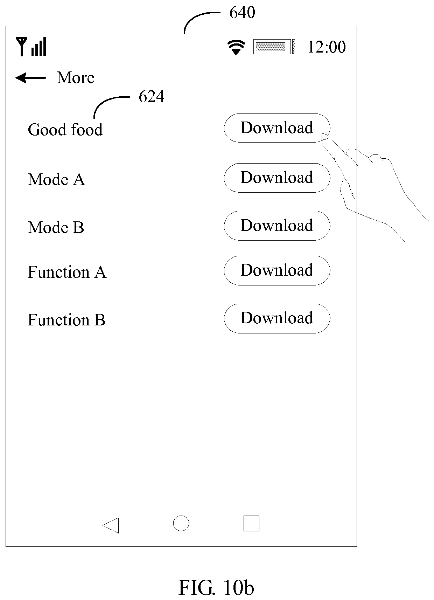

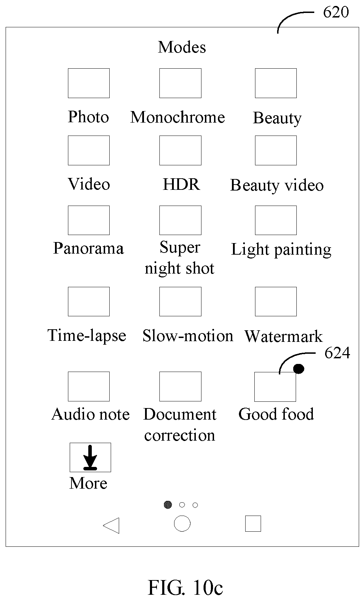

A mode or function may be added, by using a mode plug-in or a function plug-in, to the camera application provided in this embodiment of the present invention. As shown in FIG. 10a, a mode option display interface 620 may include a download option 623 that is used to download more mode plug-ins or function plug-ins. When the user selects the download option 623, the terminal receives a third indication indicating that the download option 623 is selected; and then the terminal may download a new mode plug-in or a new function plug-in. After the user selects the download option 623 in FIG. 10a, the terminal may jump, through a data service (for example, a 4G network or Wi-Fi network), to a user interface 640 that is used to download a plug-in in an application store or an application market. As shown in FIG. 10b, a user interface 640 may display a plurality of new mode plug-ins or function plug-ins for the user to download. After the user selects a specific plug-in, for example, a mode plug-in of good food 624, the terminal downloads a new plug-in based on selection of the user. After downloading the new plug-in, the terminal may load the new plug-in, and then the terminal displays an option corresponding to the new plug-in, for selection by the user. As shown in FIG. 10c, when the newly downloaded plug-in is a good food mode plug-in, the terminal displays, in the mode option display interface 620, the good food option 624 corresponding to the new mode plug-in. When the newly downloaded plug-in is a function plug-in, after loading the new function plug-in, the terminal assembles the new function plug-in and a mode plug-in (for example, a second mode plug-in) that is supported by the new function plug-in. After assembly, and after a second mode corresponding to the second mode plug-in is selected, that is, after the terminal receives an indication indicating that the user selects the second mode, the terminal may display, in the function option display interface, a function option corresponding to the new function plug-in. When a newly downloaded mode option or function option is displayed in a user interface, the mode option or function option may be identified as "new" in a plurality of manners. For example, as shown in FIG. 10c, a black dot is displayed at a top-right corner of the good food option 624, to indicate that the good food option is a newly downloaded mode; or a newly downloaded option may be highlighted.

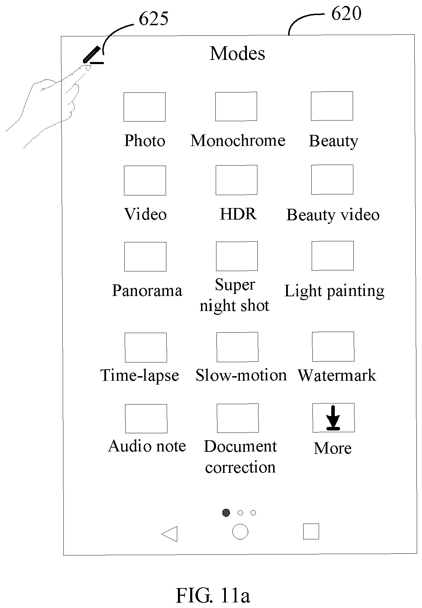

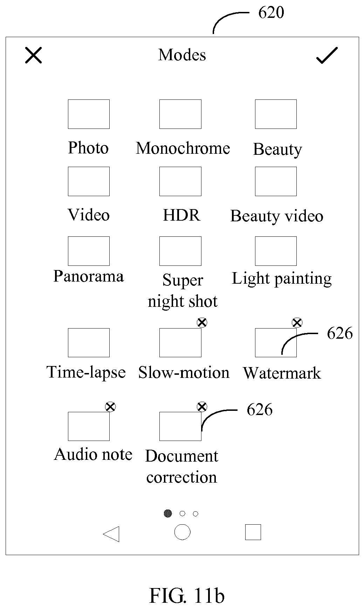

An existing mode or function may be deleted from the camera application provided in this embodiment of the present invention. As shown in FIG. 11a, in a mode option display interface 620, an existing mode may be edited. There may be a plurality of manners of starting editing, for example, touching and holding or deeply pressing a mode option icon. Alternatively, as shown in FIG. 11a, an edit button 625 exists in the user interface. After the edit button 625 is tapped, a displayed mode option becomes editable, as shown in FIG. 11b, and the user can delete one or more mode options 626. It should be noted that, in a specific implementation solution, all modes and functions can be deleted; or a developer may set some basic modes and functions to be undeletable, and allow only some modes or functions to be deleted. In addition, an arrangement order of the mode options and the function options in the user interface may be changed by the user. For example, when a mode or function is in an editable state, the mode option or function option in the user interface can be moved.

It should be noted that, UI display interfaces such as those in FIG. 6a to FIG. 6g, FIG. 7a to FIG. 7c, FIG. 8a to FIG. 8c, FIG. 10a to FIG. 10c, and FIG. 11a to FIG. 11c provided in the embodiments of the present invention are merely examples used to describe the method in this application. This application is not limited by the figures. In a specific implementation solution, the UI display interface may include more or fewer icons, or include different icons.

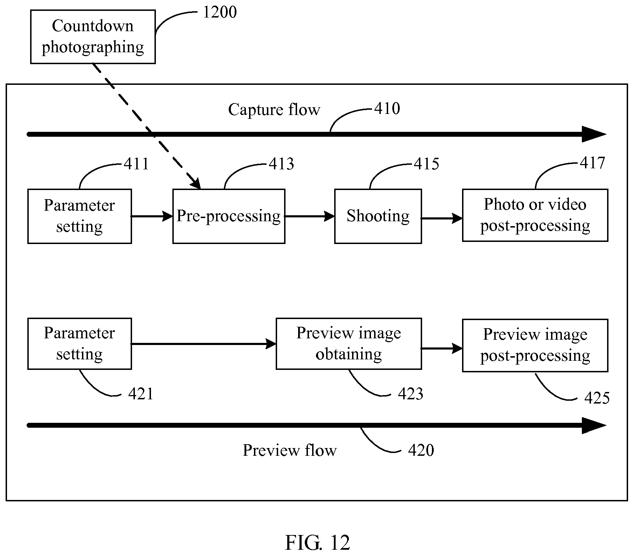

FIG. 12 to FIG. 14 are three examples of adding a function plug-in.

FIG. 12 is a schematic diagram of countdown photographing. Countdown photographing 1200 is enhancement of shooting, and is a function plug-in. Corresponding to a capture flow model, as shown in FIG. 12, a pre-processing process 413 of the capture flow 410 is added. A procedure of countdown photographing may be as follows: The user presses a shutter button; then the terminal performs photographing pre-processing, including starting countdown; after countdown ends, the terminal takes a photo; and finally, the terminal performs photographing post-processing.

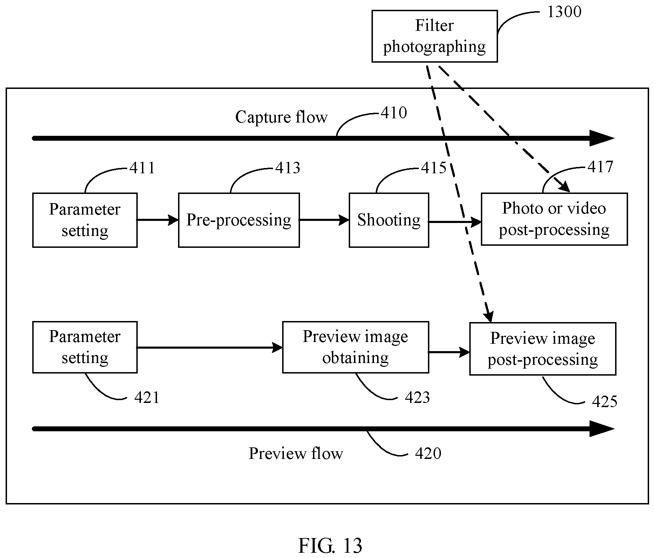

FIG. 13 is a schematic diagram of filter photographing. After a filter photographing function 1300 is selected, during image preview, the camera displays a preview image with a filter effect; and when a photo is taken, a filter effect is added to the taken photo. Therefore, as shown in FIG. 13, the filter photographing function 1300 extends both post-processing parts 417/425 in the capture flow 410 and the preview flow 420. A preview data processing procedure may be as follows: A terminal obtains each preview frame of data; performs filter effect post-processing on each preview frame of data; and then refreshes a preview, to display a preview image with a filter effect. A photographing processing procedure may be as follows: A user presses a shutter button; the terminal performs photographing pre-processing; and then the terminal takes a photo, performs filter effect post-processing on an obtained photo, and stores the photo.

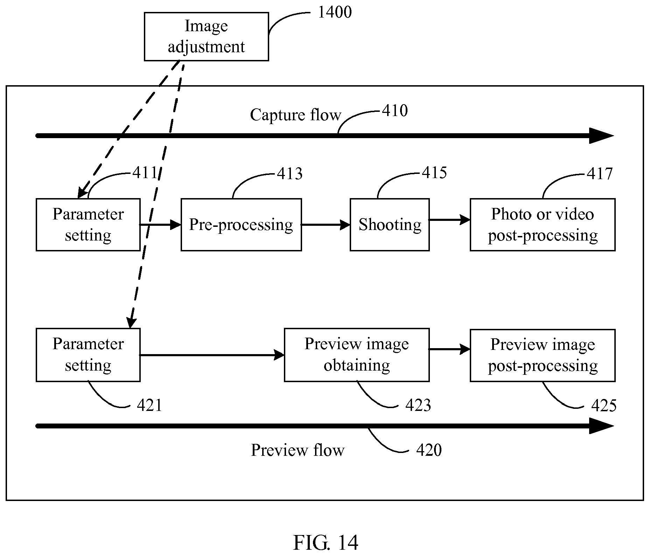

FIG. 14 is a schematic diagram of image adjustment. The image adjustment has a function of adjusting a shooting parameter of a camera lens, and can be used to adjust saturation, contrast, and/or brightness. As shown in FIG. 14, an image adjustment function 1400 extends both parameter setting parts 411/421 in the capture flow 410 and the preview flow 420. After a user selects a shooting parameter through image adjustment, the terminal adjusts the shooting parameter of the camera lens based on selection of the user, then an adjusted preview image may be displayed in a preview interface, and a taken photo is also an adjusted image.

If a camera application at delivery does not include a countdown photographing, filter photographing, or image adjustment function, a countdown photographing plug-in, a filter photographing plug-in, or an image adjustment plug-in may be downloaded and processed by using the method provided in the foregoing embodiments of the present invention, to add the countdown photographing, filter photographing, or image adjustment function to the camera application.

In the embodiments of the present invention, a mode and a function in the camera application are loaded in a plug-in manner, so that the mode and the function in the camera application are easy to change, and change costs are low. The mode and function plug-ins can be added or deleted freely, so that the camera application can be flexibly customized. In addition, the capture flow model and the preview flow model are provided in the embodiments of the present invention, so that during adding of a mode plug-in or a function plug-in, the camera application may be specifically customized for each part or module.

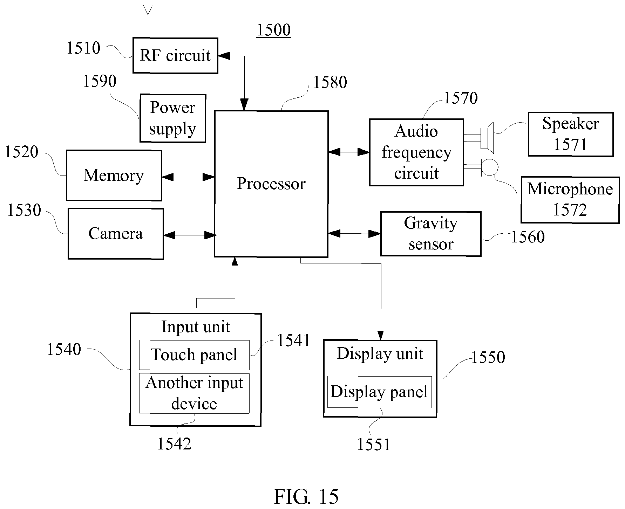

FIG. 15 is a schematic structural diagram of a terminal according to an embodiment of the present invention. The terminal provided in this embodiment of the present invention may be configured to implement the methods in the foregoing embodiments of the present invention. For ease of description, only parts related to the embodiments of the present invention are shown. For specific technical details that are not disclosed, refer to the embodiments of the present invention shown in FIG. 1 to FIG. 14. In this embodiment of the present invention, that the terminal is a mobile phone is used as an example for description. FIG. 15 shows a block diagram of a partial structure of a mobile phone 1500 related to the embodiments of the present invention.

As shown in FIG. 15, the mobile phone 1500 includes components such as an RF (radio frequency, radio frequency) circuit 1510, a memory 1520, a camera lens 1530, an input unit 1540, a display unit 1550, a gravity sensor 1560, an audio frequency circuit 1570, a processor 1580, and a power supply 1590. A person skilled in the art may understand that, a structure of the mobile phone shown in FIG. 15 does not constitute a limitation to the mobile phone, and the mobile phone 1500 may include more or fewer components than those shown in the figure, or combine some components, or have different component arrangements.

The following describes the components of the mobile phone 1500 in detail with reference to FIG. 15.

The RF circuit 1510 may be configured to send and receive a signal in a message sending or receiving process or a call process, and in particular, after receiving downlink information of a base station, send the downlink information to the processor 1580 for processing. In addition, the RF circuit 1510 sends uplink data to the base station. Generally, the RF circuit includes but is not limited to an antenna, at least one amplifier, a transceiver, a coupler, an LNA (low noise amplifier, low noise amplifier), a duplexer, and the like. In addition, the RF circuit 1510 may further communicate with a network and another device by using wireless communication. The wireless communication may use any communications standard or protocol, including but not limited to GSM (global system of mobile communication, Global System for Mobile Communications), GPRS (general packet radio service, general packet radio service), CDMA (code division multiple access, Code Division Multiple Access), WCDMA (wideband code division multiple access, Wideband Code Division Multiple Access), LTE (long term evolution, Long Term Evolution), email, SMS (short messaging service, short message service), and the like.

The memory 1520 may be configured to store a software program and a module. The processor 1580 executes various functional applications of the mobile phone 1500 and processes data by running the software program and the module stored in the memory 1520. The memory 1520 may mainly include a program storage area and a data storage area. The program storage area may store an application program (for example, a camera application) that is required by an operating system or at least one function, and the like. The data storage area may store data (for example, photo or video data) that is created based on use of the mobile phone 1500, and the like. In addition, the memory 1520 may include a high-speed random-access memory, and may further include a nonvolatile memory, for example, at least one magnetic disk storage device, a flash memory device, or another volatile solid-state memory device.

The camera lens 1530 may be configured to capture an image, and shoot a photo or a video. The mobile phone may include a front-facing camera and a rear-facing camera. There may be a plurality of rear-facing cameras. The mobile phone can control the camera lens by using a camera application installed on the mobile phone.

The input unit 1540 may be configured to receive entered digit or character information, and generate a key signal input related to user settings and functional control of the mobile phone 1500. Specifically, the input unit 1540 may include a touchscreen 1541 and another input device 1542. The touchscreen 341, also referred to as a touch panel, may collect touch operations of a user on or near the touchscreen (for example, an operation of the user on the touchscreen 1541 or near the touchscreen 1541 by using any proper object or accessory such as a finger or a stylus), and drive a corresponding connection apparatus based on a preset program. Optionally, the touchscreen 1541 may include two parts: a touch detection apparatus and a touch controller. The touch detection apparatus detects a touch orientation of the user, detects a signal brought by a touch operation, and transfers the signal to the touch controller. The touch controller receives touch information from the touch detection apparatus, converts the touch information into contact point coordinates, then sends the contact point coordinates to the processor 1580, and can receive a command sent by the processor 1580 and execute the command. In addition, various types of touchscreens such as a resistive touchscreen, a capacitive touchscreen, an infrared touchscreen, and a surface acoustic wave type touchscreen may be used to implement the touchscreen 1541. In addition to the touchscreen 1541, the input unit 1540 may include the another input device 1542. Specifically, the another input device 1542 may include but is not limited to one or more of a physical keyboard, a function key (such as a volume control key and a power switch key), a trackball, a mouse, a joystick, and the like.

The display unit 1550 may be configured to display information input by a user or information provided for the user and various menus of the mobile phone 1500. The display unit 1550 may include a display panel 1551. Optionally, an LCD (Liquid Crystal Display, liquid crystal display), an OLED (Organic Light-Emitting Diode, organic light-emitting diode), or another form may be used to configure the display panel 1541. Further, the touchscreen 1541 may cover the display panel 1551. When detecting a touch operation on or near the touchscreen 1541, the touchscreen 1541 transfers the touch operation to the processor 1580 to determine a type of a touch event. Subsequently, the processor 1580 provides corresponding visual output on the display panel 1551 based on the type of the touch event. In FIG. 15, the touchscreen 1541 and the display panel 1551 are used as two independent components to implement an input function and an input function of the mobile phone 1500. However, in some embodiments, the touchscreen 1541 and the display panel 1551 may be integrated to implement the input function and the output function of the mobile phone 1500.

The gravity sensor (gravity sensor) 1560 can detect acceleration values of the mobile phone in directions (usually three axes), can detect a value and a direction of gravity when the mobile phone is still, and can be applied to applications for recognizing a mobile phone posture (for example, switching between landscape and portrait screens, related games, and magnetometer posture calibration), a function related to vibration recognition (such as a pedometer or a knock), and the like.

The mobile phone 1500 may further include another sensor, for example, an optical sensor. Specifically, the optical sensor may include an ambient light sensor and an optical proximity sensor. The ambient light sensor can adjust luminance of the display panel 1541 based on intensity of ambient light. The optical proximity sensor can detect whether there is an object approaching or touching the mobile phone, and can turn off the display panel 1541 and/or backlight when the mobile phone 1500 approaches an ear. Other sensors such as a gyroscope, a barometer, a hygrometer, a thermometer, or an infrared sensor that may further be configured in the mobile phone 1500 are not described in detail herein.

The audio frequency circuit 1570, a speaker 1571, and a microphone 1572 may provide audio interfaces between a user and the mobile phone 1500. The audio frequency circuit 1570 may convert received audio data into an electrical signal, and transmit the electrical signal to the speaker 1571; and the speaker 1571 converts the electrical signal into a sound signal for outputting. In addition, the microphone 1572 converts a collected sound signal into an electrical signal; and the audio frequency circuit 1570 receives the electrical signal, converts the electrical signal into audio data, and outputs the audio data to the RF circuit 1510 to send the audio data to another mobile phone or the like, or outputs the audio data to the memory 1520 for further processing.

The processor 1580 is a control center of the mobile phone 1500, and uses various interfaces and lines to connect parts of the entire mobile phone. By running or executing a software program and/or a module stored in the memory 1520 and invoking data stored in the memory 1520, the processor executes various functions of the mobile phone 1500 and processes data, so as to perform overall monitoring on the mobile phone. Optionally, the processor 1580 may include one or more processing units. Preferably, an application processor and a modem processor may be integrated into the processor 1580. The application processor primarily processes an operating system, a user interface, an application program, and the like. The modem processor primarily processes wireless communication. It may be understood that, the modem processor may be not necessarily integrated into the processor 1580.

The mobile phone 1500 further includes the power supply 1590 (such as a battery) that supplies power to each component. Preferably, the power supply may be logically connected to the processor 1580 by using a power supply management system. Therefore, functions such as management of charging, discharging, and power consumption are implemented by using the power supply management system.

The mobile phone 1500 may further include a Wi-Fi (wireless fidelity, wireless fidelity) module, a Bluetooth module, and the like, which are not shown though. Details are not described herein.

The processor 1580 may execute a program instruction stored in the memory 1520, to implement the foregoing shooting method shown in any embodiment in FIG. 1 to FIG. 14.

With descriptions of the foregoing embodiments, a person skilled in the art may clearly understand that the present invention may be implemented by hardware, firmware, or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another place. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server, or another remote source by using a coaxial cable, an optical fiber/cable, a twisted pair, a digital subscriber line (DSL) or wireless technologies such as infrared ray, radio, and microwave, the coaxial cable, optical fiber/cable, twisted pair, DSL, or wireless technologies such as infrared ray, radio, and microwave are included in fixation of a medium to which they belong. For example, a disk (disk) and disc (disc) used by the present invention include a compact disc CD, a laser disc, an optical disc, a digital versatile disc (DVD), a floppy disk, and a Blu-ray disc, where the disk generally copies data by a magnetic means, and the disc copies data optically by a laser means. The foregoing combination should also be included in the protection scope of the computer-readable medium.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A shooting method, comprising:
receiving, by a terminal, a first indication for opening a camera application, wherein the camera application is installed on the terminal, the camera application is associated with at least one mode plug-in and at least one function plug-in, each mode plug-in corresponds to one mode, and each function plug-in corresponds to one function;
displaying, by the terminal, at least one mode option corresponding to the at least one mode plug-in, for selection by a user;
receiving, by the terminal, a second indication indicating that the user selects a first mode option, wherein the first mode option corresponds to a first mode;
displaying, by the terminal, a function option that supports the first mode, for selection by the user, wherein a function that supports the first mode is comprised in at least one function corresponding to the at least one function plug-in; and
receiving, by the terminal, a shooting instruction, and performing shooting based on the first mode and a function that is selected by the user from the displayed function option, wherein a first mode plug-in corresponding to the first mode and a function plug-in corresponding to the selected function are preloaded.

2. The method according to claim 1, further comprising the following:
a display interface that displays the at least one mode option or a display interface that displays the function option comprises a download option;
the terminal downloads a new function plug-in after receiving the third indication indicating that the download option is selected, wherein a function corresponding to the new function plug-in supports a second mode; and
after the terminal receives an indication indicating that the user selects the second mode, the function option displayed by the terminal comprises a function option corresponding to the new function plug-in.

3. The method according to claim 1 or 2, further comprising the following:
a display interface that displays the at least one mode option or a display interface that displays the function option comprises a download option; and
the terminal downloads a new mode plug-in after receiving a third indication indicating that the download option is selected; and
the terminal displays a mode option corresponding to the new mode plug-in, for selection by the user.

4. The method according to any one of claims 1 to 3, further comprising:
deleting, by the terminal, one or more of the at least one mode plug-in and the at least one function plug-in based on a received deletion indication.

5. The method according to any one of claims 1 to 4, wherein the displaying, by the terminal, a function option that supports the first mode, for selection by the user comprises:
obtaining, by the terminal from a dynamically updated set that comprises function options corresponding to all function plug-ins, a function option that matches the first mode; and
displaying, by the terminal, the function option that matches the first mode, for selection by the user.

6. The method according to any one of claims 2 to 5, wherein after the new function plug-in is downloaded, the method further comprises:
loading, by the terminal, the new function plug-in; and
after the user selects the function option corresponding to the new function plug-in, running, by the terminal, the new function plug-in, and invoking a first module corresponding to the new function plug-in, to perform the function corresponding to the new function plug-in.

7. The method according to claim 6, wherein the first module comprises a capture flow parameter setting module, a capture flow pre-processing module, a capturing module, a capture flow post-processing module, a preview flow parameter setting module, a preview flow pre-processing module, or a preview flow post-processing module.

8. The method according to any one of claims 1 to 7, wherein
the terminal displays, in a first user interface, the at least one mode option corresponding to the at least one mode plug-in, for selection by the user;
the terminal displays, in a second user interface, the function option that supports the first mode, for selection by the user; and
the first user interface is different from the second user interface.

9. The method according to claim 8, wherein the second user interface comprises a function display interface, or the second user interface comprises a preview interface and a function display interface.

10. The method according to any one of claims 1 to 9, further comprising:
before the terminal displays the at least one mode option for selection by the user, receiving, by the terminal, a fourth indication for displaying a mode option.

11. The method according to any one of claims 1 to 10, further comprising:
before the terminal displays the function option for selection by the user, receiving, by the terminal, a fifth indication for displaying a function option.

12. The method according to any one of claims 1 to 11, wherein the mode plug-in is used to control a shooting procedure.

13. The method according to any one of claims 1 to 12, wherein the function plug-in is used to control a shooting function.

14. The method according to claim 12, wherein the mode corresponding to the mode plug-in comprises any one or more of the following: photo, monochrome, beauty, video, high dynamic range imaging, beauty video, super night shot, light painting, time-lapse, slow-motion, watermark, audio note, document correction, and good food mode.

15. The method according to claim 13, wherein the function corresponding to the function plug-in comprises any one or more of the following: resolution, geographical tag, automatically add watermarks, assistive grid, mute, self-timer, audio control, touch to capture, capture smiles, object tracking, touch and hold shutter button function, volume button function, ultra snapshot, image adjustment, and video stabilization.

16. The method according to any one of claims 1 to 15, wherein the function option that supports the first mode is a function that is compatible with the first mode.

17. A terminal, comprising:
a processor;
a memory;
a camera lens; and
a display, wherein
the processor is configured to:
receive a first indication for opening a camera application, wherein the camera application is installed on the terminal, the camera application is associated with at least one mode plug-in and at least one function plug-in, each mode plug-in corresponds to one mode, and each function plug-in corresponds to one function;
display, by using the display, at least one mode option corresponding to the at least one mode plug-in, for selection by a user;
receive a second indication indicating that the user selects a first mode option, wherein the first mode option corresponds to a first mode;
display, by using the display, a function option that supports the first mode, for selection by the user, wherein a function that supports the first mode is comprised in at least one function corresponding to the at least one function plug-in; and
receive a shooting instruction, and perform shooting by using the camera lens based on the first mode and a function that is selected by the user from the displayed function option, wherein a first mode plug-in corresponding to the first mode and a function plug-in corresponding to the selected function are preloaded.

18. The terminal according to claim 17, wherein a display interface that displays the at least one mode option or a display interface that displays the function option comprises a download option;
the processor is further configured to:
download a new function plug-in after receiving the third indication indicating that the download option is selected, wherein a function corresponding to the new function plug-in supports a second mode; and
after an indication indicating that the user selects the second mode is received, the displayed function option comprises a function option corresponding to the new function plug-in.

19. The terminal according to claim 17 or 18, wherein a display interface that displays the at least one mode option or a display interface that displays the function option comprises a download option; and the processor is further configured to:
download a new mode plug-in after receiving a third indication indicating that the download option is selected; and
display, by using the display, a mode option corresponding to the new mode plug-in, for selection by the user.

20. The terminal according to any one of claims 17 to 19, wherein the processor is further configured to:
delete, based on a received deletion indication, one or more of the at least one mode plug-in and the at least one function plug-in that have been loaded.

21. The terminal according to any one of claims 17 to 20, wherein when displaying the function option that supports the first mode, for selection by the user, the processor is specifically configured to:
obtain, from a dynamically updated set that comprises function options corresponding to all function plug-ins, a function option that matches the first mode; and
display, by using the display, the function option that matches the first mode, for selection by the user.

22. The terminal according to any one of claims 18 to 21, wherein the processor is further configured to:
after downloading the new function plug-in, load the new function plug-in; and
after the user selects the function option corresponding to the new function plug-in, run the new function plug-in, and invoke a first module corresponding to the new function plug-in, to perform the function corresponding to the new function plug-in.

23. The terminal according to claim 22, wherein the first module comprises a capture flow parameter setting module, a capture flow pre-processing module, a capturing module, a capture flow post-processing module, a preview flow parameter setting module, a preview flow pre-processing module, or a preview flow post-processing module.

24. The terminal according to any one of claims 17 to 23, wherein
the at least one mode option corresponding to the at least one mode plug-in is displayed in a first user interface for selection by the user;
the function option that supports the first mode is displayed in a second user interface for selection by the user; and
the first user interface is different from the second user interface.

25. The terminal according to claim 24, wherein the second user interface comprises a function display interface, or the second user interface comprises a preview interface and a function display interface.

26. The terminal according to any one of claims 17 to 25, wherein the processor is further configured to:
before displaying the at least one mode option for selection by the user, receive a fourth indication for displaying a mode option.

27. The terminal according to any one of claims 17 to 26, wherein the processor is further configured to:
before displaying the function option for selection by the user, receive a fifth indication for displaying a function option.

28. The terminal according to any one of claims 17 to 27, wherein the mode plug-in is used to control a shooting procedure.

29. The terminal according to any one of claims 17 to 28, wherein the function plug-in is used to control a shooting function.

30. The terminal according to claim 28, wherein the mode corresponding to the mode plug-in comprises any one or more of the following: photo, monochrome, beauty, video, high dynamic range imaging, beauty video, super night shot, light painting, time-lapse, slow-motion, watermark, audio note, document correction, and good food mode.

31. The terminal according to claim 29, wherein the function corresponding to the function plug-in comprises any one or more of the following: resolution, geographical tag, automatically add watermarks, assistive grid, mute, self-timer, audio control, touch to capture, capture smiles, object tracking, touch and hold shutter button function, volume button function, ultra snapshot, image adjustment, and video stabilization.

32. The terminal according to any one of claims 17 to 31, wherein the function option that supports the first mode is a function that is compatible with the first mode.
